# EUROPÄISCHE PATENTANMELDUNG

(11) **EP 4 008 936 A1**
(43) Veröffentlichungstag der Anmeldung: **08.06.2022**
(21) Anmeldenummer: 21211281.7
(22) Anmeldetag: 30.11.2021
(51) Int. Cl.: F16K 5/12, F16K 3/34, F25B 41/31, F16K 5/04, F16K 5/06

(54) **VENTIL ZUR STEUERUNG EINES FLUIDSTROMS**

(30) Priorität: 01.12.2020 DE 102020215109; 29.11.2021 DE 102021213409
(71) Anmelder: Robert Bosch GmbH, 70442 Stuttgart (DE)
(72) Erfinder: Eichhorn, Philipp, 76307 Karlsbad (DE)

(57) **Zusammenfassung**

Die Erfindung betrifft ein Ventil (1), insbesondere Expansionsventil, zum Regeln eines Durchflusses eines Fluides in einem Fluidkreislauf, insbesondere eines Kältemittels in einem Kältemittelkreislauf, aufweisend ein Ventilkörper (5) mit Anschlüssen zum Verbinden mit Fluidleitungen, wobei die Anschlüsse mit einem inneren Volumen (10) des Ventilkörpers (5) mittels Durchgangsausnehmungen (20a, 20b) verbunden sind, sowie ein um eine Drehachse (18) drehbar gelagertes Ventilmittel (15), welches in dem inneren Volumen (10) des Ventilkörpers (5) angeordnet ist, wobei das Ventilmittel (15) eine, insbesondere Kanal ausgebildete, Ausnehmung (16, 16a, 16b) in der Oberfläche aufweist. Es wird vorgeschlagen, dass die Ausnehmung (16) einen ersten Bereich (16a) und einen zweiten Bereich (16b) aufweist, wobei in jedem Bereich der Querschnitt (A) gleichbleibend ist und wobei zwischen den Bereichen der Querschnitt (A) sich sprungartig ändert.

## Beschreibung

Die Erfindung betrifft ein Ventil, insbesondere Expansionsventil, zum Regeln eines Durchflusses eines Fluids in einem Fluidkreislauf, insbesondere eines Kältemittels in einem Kältemittelkreislauf und ein Kraftfahrzeug mit einem solchen Ventil.

### Stand der Technik

Es sind bereits Ventile zur Regelung eines Fluidstroms bekannt. Insbesondere die DE 10 2017 208 181 A1 offenbart ein Ventil mit einer Ausnehmung an der Oberfläche.

### Offenbarung der Erfindung

Die objektive technische Aufgabe der Erfindung besteht unter anderem im Bereitstellen eines Ventils, insbesondere eines Expansionsventils mit einem stufenförmigen Durchströmungsverlauf.

Gelöst wird die Aufgabe mit einem Ventil mit den Merkmalen des Hauptanspruchs.

Das erfindungsgemäße Ventil weist einen Ventilkörper mit Anschlüssen zum Verbinden mit Fluidleitungen auf. Die Anschlüsse sind mit einem inneren Volumen des Gehäuses mittels Durchgangsausnehmungen verbunden.

Ferner ist Ventilmittel vorgesehen, welches um eine Drehachse drehbar gelagert angeordnet ist. Das Ventilmittel ist im inneren des Volumens des Gehäuses angeordnet. Das Ventilmittel weist eine Ausnehmung in der Oberfläche auf.

Vorteilhaft ist, dass die Ausnehmung einen ersten und einen zweiten Bereich aufweist, wobei in jedem Bereich der Querschnitt gleichbleibend ist. Vorteilhaft ändert sich zwischen den Bereichen der Querschnitt sprungartig.

Das erfindungsgemäße Ventil ermöglicht die stufenförmige Regelung eine Fluidstroms, insbesondere eine stufenförmige Expansion in einem Kältemittelkreis. Insbesondere wenn das Ventil als Expansionsventil in einem Kältemittelkreis angeordnet ist.

Durch die in den Unteransprüchen aufgeführten Maßnahmen ergeben sich vorteilhafte Weiterbildungen und Verbesserungen der im Hauptanspruch angegebenen Merkmale.

Eine vorteilhafte Weiterbildung ist, dass das Ventilmittel als Vollkörper ausgebildet ist. Das Ventilmittel ist vorzugsweise kein Hohlkörper.

Gemäß einer vorteilhaften Weiterbildung ist die Ausnehmung als Kanal, Schlitz, oder Nut ausgebildet. Die Ausnehmung ist nur an der Oberfläche ausgebildet. Die Ausnehmung und deren Bereiche sind jeweils kanalartig ausgebildet.

Gemäß einer Weiterbildung weist die Ausnehmung keinen tunnelartigen Bereich auf. Die Ausnehmung mündet in keinen tunnelartigen Bereich. Die Ausnehmung ist vorzugsweise radial nach außen offen. Ein tunnelartiger Bereich ist ein Bereich, der insbesondere durch das Ventilmittel hindurchreicht. Ein tunnelartiger Bereich kann insbesondere eine quadratische Grundform aufweisen. Er ist nicht auf eine Zylinderform begrenzt.

Gemäß einer Weiterbildung der Erfindung ist das Ventilmittel als Hohlkörper ausgebildet. Das Ventilmittel weist einen Hohlraum umgebende Hülle auf. Die kanalartige Ausnehmung weist keine Verbindung zwischen dem Hohlraum und der kanalartigen Ausnehmung auf. Sind mehrere kanalartige Ausnehmungen ausgebildet, so weist keine der kanalartigen Ausnehmungen eine Verbindung zu dem Hohlraum auf. Vorzugsweise durchdringt die kanalartige Ausnehmung die Ventilmittel nicht.

Eine vorteilhafte Weiterbildung ist, dass der erste Bereich und der zweite Bereich zusammen mindestens 90 % der gesamten Ausnehmung umfassen. Insbesondere kann die Ausnehmung in den Randbereichen eine sich in Umfangsrichtung ändernde Tiefe aufweisen. Dieser Bereich ist zwar Teil der Ausnehmung, jedoch nicht Teil des ersten oder zweiten Bereichs.

Eine vorteilhafte Weiterbildung ist, dass der Übergang zwischen Oberfläche des Ventilmittels und der Ausnehmung sprungartig, ausgebildet ist. Vorzugsweise sind die Übergänge entsprechend einer Stufe ausgebildet. Die Ausnehmung weist somit zur Oberfläche des Ventilmittels im Wesentlichen senkrechte Wände auf. Vorzugsweise weist die Ausnehmung an ihren in Längsrichtung der Ausnehmung stirnseitigen Enden eine Stufe auf. Vorzugsweise weist die Ausnehmung an der Oberfläche des Ventilmittels eine rechtwinklige Grundform auf.

Eine vorteilhafte Weiterbildung zeichnet sich dadurch aus, dass sich die Ausnehmung mit einem Winkel zwischen 0 und 90 Grad, insbesondere 0 und 45 Grad, vorzugsweise 0 Grad, gegenüber einer Ebene deren Normalenvektor parallel zur Drehachse verläuft, erstreckt. Somit ist eine bestmögliche Expansion gegeben.

Eine vorteilhafte Weiterbildung ist, dass ein Ventilsitz ausgebildet ist, der an die Durchgangsausnehmung anschließend und angrenzend an das Ventilmittel angeordnet ist. Der Ventilsitz dichtet das Ventilmittel gegenüber dem Ventilkörper ab.

Eine vorteilhafte Weiterbildung ist, dass der Ventilsitz ein, insbesondere im Wesentlichen rundes, Dichtelement aufweist, welches eine dichtende Schnittstelle zwischen dem Ventilkörper und dem Ventilmittel bildet.

Als eine vorteilhafte Weiterbildung hat sich gezeigt, dass das Ventilmittel im Wesentlichen kugelförmig ausgebildet ist. Vorzugsweise ist die Grundform des Ventilmittels eine Kugel.

Eine vorteilhafte Weiterbildung ist, dass die Durchgangsausnehmungen zylinderförmig ausgebildet sind und dass der Ventilsitz eine zylinderförmige Innenfläche aufweist, die sich an die zylinderförmige Durchgangsausnehmung anschließt. Der Strömungswiederstand auf das strömende Fluid ist somit minimiert.

Eine vorteilhafte Weiterbildung ist, dass zwischen den

Durchgangsausnehmungen ein Winkel zwischen 45 und 180 Grad, insbesondere ein rechter Winkel, ausgebildet ist.

Die Erfindung betrifft auch ein Kraftfahrzeug mit einem Ventil gemäß einem der vorhergehenden Ansprüche.

Ausführungsbeispiele sind in den Figuren dargestellt und in der nachfolgenden Beschreibung näher erläutert. Es zeigen:
- Figur 1: eine Schnittansicht durch ein erfindungsgemäßes Ventil,
- Figur 2 a, b, c: verschiedene Drehwinkel,
- Figur 3: einen Verlauf des Querschnitts über den Drehwinkel,
- Figur 4: eine Seitenansicht einer Ausführungsform eines Ventilmittels und
- Figur 5: eine Seitenansicht einer weiteren Ausführungsform eines Ventilmittels.

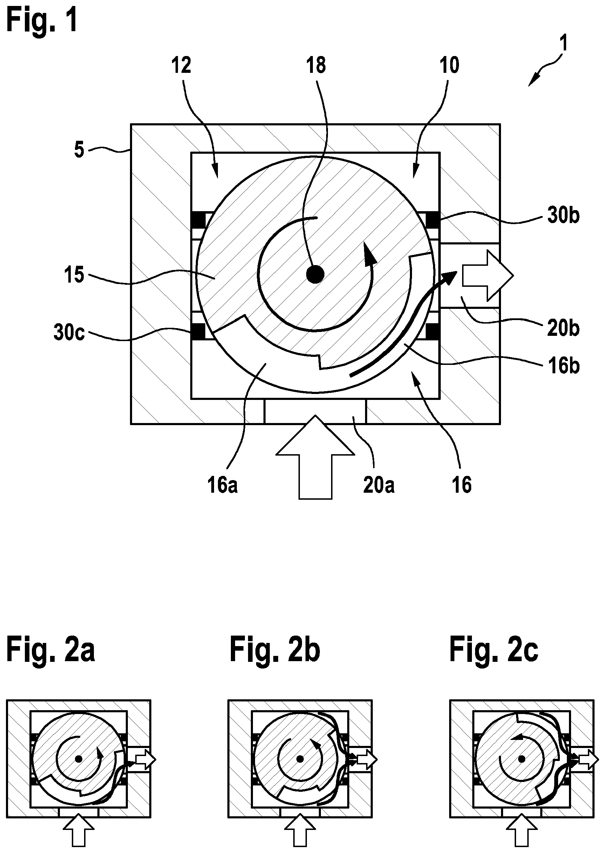

In Figur 1 ist eine Schnittansicht durch ein erfindungsgemäßes Ventil 1 dargestellt. Das Ventil 1 weist einen Ventilkörper 5 auf. Der Ventilkörper 5 bildet insbesondere das Gehäuse des Ventils 1. In dem Ventilkörper 5 ist ein inneres Volumen 10 ausgebildet.

Das innere Volumen 10 ist insbesondere als Hohlraum ausgebildet.

In dem inneren Volumen 10 ist im montierten Zustand ein Ventilmittel 15 angeordnet. Im montierten Zustand des Ventilmittels 15 verbleibt im inneren Volumen 10 ein durchströmbares Innenvolumen 12 zwischen dem Ventilmittel 15 und dem Ventilkörper 5. Das durchströmbare Innenvolumen 12 kann von dem Fluid umströmt werden.

Die dickeren Pfeile in den Figuren 1, 2a, 2b, 2c deuten jeweils den Fluidstrom, insbesondere Kältemittelstrom, an.

Das Ventilmittel 15 ist insbesondere im Wesentlichen zylinderähnlich oder kugelähnlich ausgebildet. Bei einer kugelähnlichen Ausbildung weist das Ventilmittel 15 eine im wesentlichen kugelförmige Grundform auf. Bei einer zylinderähnlichen Ausbildung weist das Ventilmittel eine zylinderförmige Grundform auf.

Das Ventilmittel 15 ist drehbar in dem Ventilkörper 10 angeordnet. Das Ventilmittel 15 ist beweglich, insbesondere gegenüber dem Ventilkörper 5 drehbar um eine sich im Wesentlichen in Axialrichtung erstreckende Drehachse 18 gelagert. Die Drehachse 18 verläuft in Figur 1 senkrecht zur Zeichnungsebene. Die Drehachse 18 ist in Figur 1 als schwarzer Punkt dargestellt.

Vorzugsweise ist ein elektrisches Antriebsmittel vorgesehen, welches derart mit dem Ventilmittel 15 verbunden ist, dass das elektrische Antriebsmittel das Ventilmittel 15 drehen kann. Das Ventilmittel 15 ist um die Drehachse 18 drehbar gelagert. Vorzugsweise ist ein Ventilschaft an der Drehachse 18 ausgebildet, wobei die Drehbewegung des elektrischen Antriebs über den Ventilschaft an das Ventilmittel 15 weitergeleitet wird. Insbesondere handelt es sich bei der Drehachse um eine gedachte Achse.

Der elektrische Antrieb ist insbesondere als Schrittmotor, bürstenloser Motor oder Bürstenmotor ausgebildet. Vorzugsweise ist das Antriebsmittel derart ausgebildet, dass es möglichst präzise drehen kann und somit eine präzise Regelung des Drehstellung des Ventilmittels gegenüber dem Ventilsitz ermöglicht. Die Drehung wird mittels dem Ventilschaft von dem elektrischen Antrieb auf das Ventilmittel 15. Optional ist zwischen Ventilmittel 15 und elektrischem Antrieb ein Getriebe ausgebildet. Die Drehbewegung wird mittels dem Getriebe übertragen.

Ferner sind in dem Ventilkörper 10 Durchgangsausnehmungen 20a und 20b ausgebildet. Die Durchgangsausnehmungen 20a und 20b sind jeweils mit einem Anschluss des Ventils 1 verbunden. Einer der Anschlüsse bildet einen Fluideinlass und einen der Anschlüsse bildet einen Fluidauslass. Beispielsweise bildet in Figur 1 der Anschluss, der mit der Durchgangsausnehmung 20a verbunden ist einen Einlass und der Anschluss, der mit der Durchgangsausnehmung 20b verbunden ist ein Auslass.

Vorzugsweise sind die Durchgangsausnehmungen 20a und 20b in einer Ebene ausgebildet. Gemäß einer Weiterbildung der Erfindung weist das Ventil 1 zumindest eine weitere Durchgangsausnehmung auf. Bei drei Durchgangsausnehmungen handelt es sich insbesondere um ein Dreiwegeventil. Beispielhaft sind die Durchgangsausnehmungen 20a und 20b im Wesentlichen mit einem rechten Winkel zueinander angeordnet. Es ist jedoch auch eine fluchtende Ausbildung möglich.

Die Anschlüsse sind dafür vorgesehen den Ventilkörper 10 mit einer Fluidleitung zu verbinden. Vorzugsweise handelt es sich bei dem Fluid um ein Kältemittel. Das Ventil 1 ist für den Einsatz in Fluidkreisen, insbesondere Kältemittelkreisen vorgesehen.

Vorzugsweise ist sein Einsatzgebiet ein Expansionsventil in einem Wärmekreis/Kältekreis. Insbesondere handelt es sich bei dem Fluid um ein natürliches Kältemittel, wie beispielsweise Kohlenwasserstoffe, Kohlendioxid, Ammoniak, Propan, Butan, Propen, Wasser oder ein synthetisches Kältemittel wie beispielsweise Fluorchlorkohlenwasserstoffe oder teilhalogenierte Fluorkohlenwasserstoffe

Vorzugsweise ist eine oder mehrere der Durchgangsausnehmung zylinderförmig ausgebildet. Die Durchgangsausnehmung 20a, 20b reichen in das innere Volumen 10, bzw. in den durchströmbaren Innenbereich 12.

Ferner weist das erfindungsgemäße Ventil 1 zumindest einen Ventilsitz 30 auf. Der Ventilsitz 30 weist insbesondere eine Dichtung auf oder ist als eine solche ausgebildet. Der Ventilsitz 30 ist an dem Ventilkörper 10 angeordnet. Insbesondere ist der Ventilsitz 30 angrenzend an die Durchgangsausnehmung 20b angeordnet. Der Ventilsitz 30 ist im Öffnungsquerschnitt einer der Durchgangsausnehmungen 20b angeordnet. Der Ventilsitz 30 ist vorzugsweise in einem dem inneren Volumen 10 zugewandten Bereich einer der Durchgangsausnehmungen 20b angeordnet. Er umschließt in Umfangsrichtung die Durchgangsausnehmung 20b, an welcher er angeordnet ist.

Im Beispiel gemäß Figur 1 ist ein Ventilsitz 30b an der Durchgangsausnehmung 20b angeordnet. Der Innenumfang des Ventilsitzes 30b sowie der Innenumfang der Durchgangsausnehmung 20b sind vorzugsweise bündig bzw. bilden eine Fläche, insbesondere möglichst ohne Hindernisse, beispielsweise Kanten oder Stufen.

Der weitere in Figur 1 dargestellte Ventilsitz 30c hat weniger die Funktion einen Bereich abzudichten, als vielmehr die Funktion eine Gegenmoment auf den Ventilsitz 30b auszuüben. Er übt eine entgegengesetzte Kraft mit im wesentlicher gleicher Stärke auf das Ventilmittel 15 aus.

Gemäß einer Weiterbildung der Erfindung ist an der ersten Durchgangsausnehmung 20a ebenfalls ein Ventilsitz ausgebildet. Vorzugsweise ist an jeder Durchgangsausnehmung ein Ventilsitz 30 ausgebildet. Wäre an der ersten Durchgangsausnehmung 20a ein Ventilsitz ausgebildet. So wäre dieser von den Eigenschaften und Anforderungen gleich wie der Ventilsitz 30b an der zweiten Durchgangsausnehmung. Ggf. würden sich Anpassungen an Querschnitt und Form entsprechend der Durchgangsausnehmung ergeben.

Ist ein Ventilsitz entsprechend dem Ventilsitz 30b an der Durchgangsausnehmung 20a ausgebildet, so würde der Ventilsitz die Durchgangsausnehmung 20a gegenüber dem inneren Volumen 10 abdichten. Der Ventilsitz verhindert ein ungewolltes Ein- oder Ausströmen von Fluid in das Innere Volumen 10. Der Ventilsitz ist am Ventilkörper 10 angeordnet. Und liegt flächig an dem Ventilmittel 15 an.

Auch wäre ein Ventilsitz gegenüber denkbar, der wie der Ventilsitz 30c eine Gegenmoment erzeugt. Der weitere Ventilsitz mit einer zum Ventilsitz 30c vergleichbaren Funktion an der bezogen auf den Durchgangsausnehmung 20a gegenüberliegenden Seite des Ventilmittels 15 ergeben.

Der Ventilsitz 30a, 30b ist angrenzend an das Ventilmittel 15 angeordnet. Der Ventilsitz 30a, 30b stellt eine dichtende Schnittstelle zwischen Ventilmittel 15 und Ventilkörper 10 dar. Der Ventilsitz 30a, 30b umfasst eine Dichtungsfläche die dem Ventilmittel 15 zugerichtet ist. Sie ist vorzugsweise übereinstimmend mit der Oberfläche des Ventilmittels 15, insbesondere konkav ausgebildet. Vorzugsweise ist der Ventilsitz 30, insbesondere die Ventilsitze 30a, 30b, derart ausgebildet, dass das Fluide zwischen Ventilkörper und Ventilmittel 15 nicht strömen kann.

Der Ventilsitz 30a, 30b ist insbesondere aus einem synthetischen Gummi wie beispielsweise EPDM ausgeformt. Alternativ weist der Ventilsitz ein Art Teflon Werkstoff auf. Der Teflon Werkstoff seinerseits ist gegen den Ventilkörper über ein Gummimaterial (Silikon) abgedichtet.

Wird von einem Ventilsitz 30 gesprochen, sind optional auch immer die anderen Ventilsitze gemeint.

Das Ventilmittel 15 weist eine Ausnehmung 16, insbesondere eine Expansionsausnehmung, auf. Die Ausnehmung 16 ist in der Mantelfläche ausgebildet. Die Ausnehmung 16 bildet einen Kanal, und ist insbesondere als rinnenförmiges Element, vorzugsweise als Nut, beispielsweise als Schlitze ausgebildet. Die Ausnehmung 16 verläuft in Umfangsrichtung nur entlang der Oberfläche des Ventilmittels 15. Die Ausnehmung 16 weist vorzugsweise keinen Tunnelbereich auf. Die Ausnehmung 16 mündet in keinen Tunnelbereich. Die Ausnehmung ist in radialer Richtung über die gesamte Längserstreckung an der Oberfläche des Ventilmittels 15 offen. Die Ausnehmung 16 ist kanalartig ausgebildet.

Die Ausnehmung 16 weist einen ersten Bereich 16a und einen zweiten Bereich 16b auf. Die Bereiche 16a, 16b unterscheiden sich darin, dass sie einen anderen Querschnitt aufweisen. Gemäß einer Weiterbildung weisen die Bereiche untereinander sich unterscheidende Querschnittsformen auf. Die Querschnittsform in einem Bereich kann insbesondere rechtwinklig, abgerundet oder dreieckig ausgebildet sein. Es sind jedoch auch andere Querschnittsformen denkbar. Gemäß einer Weiterbildung ist es denkbar, dass die Ausnehmung 16 im Wesentlichen abgerundete Kanten, insbesondere Fasen, aufweist. Vorzugsweise weist die Ausnehmung 16 eine Fase auf. Die Fase ist insbesondere fertigungstechnisch bedingt. Vorzugsweise ist die Grundform der Ausnehmung 16, bzw. der Bereiche 16a, 16b der Ausnehmung an der Oberfläche jeweils rechteckig. Auch sind die Übergänge zu der Oberfläche des Ventilmittels 15 stufenartig. Vorzugsweise ist jeder Bereich der Ausnehmung kanalartig ausgebildet.

Vorzugsweise ist die Querschnittsform in einem Bereich gleichbleibend. Insbesondere weist jeder Bereich 16a, 16b nur eine Querschnittsform auf. Der Querschnitt in einem Bereich bleibt gleich. Vorzugsweise ist die Querschnittsform rechtwinklig oder trapezförmig.

Gemäß einer Weiterbildung ändert sich die Querschnittsform in einem Bereich, die Querschnittsfläche bleibt jedoch gleich.

Vorzugsweise ist der Querschnitt in einem Bereich gleichbleibend. Der Querschnitt ergibt sich insbesondere aus der Tiefe der Ausnehmung und der Breite. Die Tiefe entspricht gemäß Figur 1 der Erstreckung in Radialrichtung. Die Breite entspricht der Erstreckung parallel zur Drehachse 18. Die Längserstreckung der Ausnehmung 16 entspricht der Erstreckung in Umfangsrichtung. Dies gilt insbesondere dann, wenn sich die Ausnehmungen im Wesentlichen in Umfangsrichtung also in einer Ebene deren Normalenvektor parallel zur Drehachse 18 ist, erstrecken. Ist zwischen den Ausnehmungen und der gedachten Ebene ein Winkel ausgebildet verhalten sich die Längs- bzw. Tiefen- und Breitenangaben entsprechend. Vorzugsweise ist die Grundform rechtwinklig ausgebildet.

Die Ventilsitze verhindern, dass das Fluid das Ventilmittel 15 umströmen kann. Es ist lediglich die Ausbildung eines Fluidstroms mittels einer Ausnehmung 16 möglich. Ein Fluidstrom zwischen den Durchgangsausnehmungen 20a, 20b erfolgt nur durch die Ausnehmung 15. Sodass das Fluid lediglich durch die Ausnehmung 16 strömen kann. Das Fluid kann strömen, wenn die Drehstellung des Ventilmittels derart ausgebildet ist, dass die Ausnehmung einen Ventilsitz überbrückt. Ein weiterer Strom zwischen Durchgangsausnehmung und inneren Volumenbereich 12 wird durch den Ventilsitz 30 verhindert. Die Ausnehmung 16 erlaubt es den Ventilsitz 30 zu umströmen.

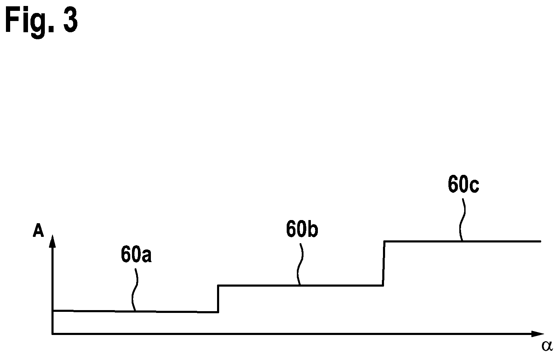

Zwischen dem ersten Bereich 16a und dem zweiten Bereich 16b ändert sich der Querschnitt im Wesentlichen sprungartig. Unter im Wesentlichen wird hier verstanden, dass fertigungstechnisch ein 100% Sprung nicht möglich ist. Vielmehr können kleine Fasen, Falze oder minimale Abschrägungen, oder Rundungen ausgebildet sein. Es ergibt sich ein Querschnittsverlauf über Drehwinkelverlauf entsprechend der Figur 3. In Figur 3 ist der Querschnitt (A) über den Drehwinkel (α) aufgetragen. Die Höhe der Stufen ist in Figur 3 beispielhaft um diese zu verdeutlichen.

Befindet sich das Ventil 1 in der Ventilstellung gemäß Figur 2a, so ergibt sich der Querschnitt entsprechend dem Verlauf 60a in Figur 3. Befindet sich das Ventil Ventilstellung gemäß Figur 2b, so gibt sich der Verlauf gemäß 60b. Befindet sich das Ventil in der Ventilstellung gemäß Figur 2c, so ergibt sich der Verlauf gemäß 60c in Figur 3.

Bei der Ventilstellung gemäß Figur 2a strömt das Fluid über die Durchgangsausnehmung 20a in das innere Volumen 10 des Ventils 1. Es strömt durch die Ausnehmung, insbesondere den zweiten Bereich 16b der Ausnehmung zur Durchgangsausnehmung 20b.

Bei der Ventilstellung gemäß Figur 2b kann das Fluid zusätzlich von zwei Seiten in die Ausnehmung 16b strömen. Es ergibt sich ein Verlauf gemäß 60b in Figur 3.

Bei der Ventilstellung gemäß Figur 2c kann das Fluid über den ersten Bereich 16a und den zweiten Bereich 16b in die Durchgangsausnehmung 20b strömen. Es ergibt sich ein Verlauf gemäß 60c in Figur 3.

Nimmt man nun beispielhaft an, dass der effektive Querschnitt von 16a zwei und der von 16b eins beträgt, so ergibt sich bei der Stellung gemäß Figur 2a ein effektiver Querschnitt von 1, bei einer Stellung gemäß Figur 2 ein effektiver Querschnitt von zwei und bei einer Stellung gemäß Figur 2c ein effektiver Querschnitt von 3. Es ist aus fluidtechnisches Gründen klar, dass auf einen Fluidstrom noch weitere Faktoren als der Querschnitt wirken und sich daher nicht 1:1 ein entsprechender Volumenstrom einstellt.

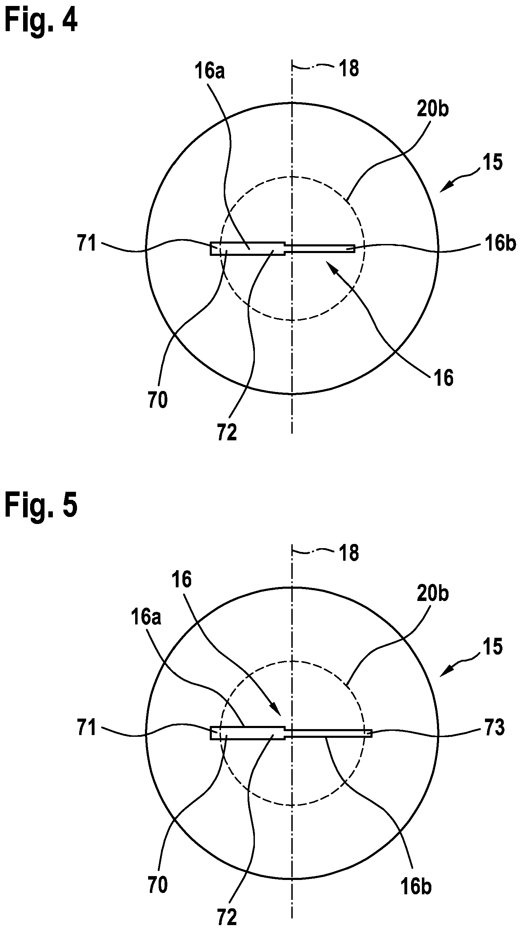

In Figur 4 ist eine Seitenansicht auf eine Ausführungsform eines Ventilmittels 15 dargestellt. Insbesondere ist die Längsausrichtung der Ausnehmung 16 minimiert. Die Ausnehmungen 16a und 16b sind gegenüber den Ausnehmungen in Figur 2 anders ausgebildet. Dennoch kann auch hier entnommen werden, dass der Querschnitt zwischen der Ausnehmung 16a und 16b unterschiedlich ist. Ferner ist in Figur 4 mit der gestrichelten Linie der Ventilsitz 30b an der Durchgangsausnehmung 20b angedeutet. In der hier vorliegenden Ventilstellung kann das Fluid im Bereich 71 in die Ausnehmung einströmen und im Bereich 72 aus der Ausnehmung wieder herausströmen. Es kann trotz Ventilsitz eine Durchströmung des Ventils im Bereich 70 erfolgen. Die Durchströmung ist hierbei abhängig vom Querschnitt der Ausnehmung.

In Figur 5 ist eine Seitenansicht auf eine Ausführungsform eines Ventilmittels 15 dargestellt. Die Bereiche 16a und 16b der Ausnehmung 16 sind hierbei derart lang ausgebildet, dass das Fluid über beide Seiten eines Bereichs einer der Ausnehmung einströmen und den Ventilsitz 30b umströmen kann. Es kann hier eine Einströmung im Bereich 71 und 73 erfolgen. Bei einer solchen Ausgestaltung ergibt sich insbesondere ein Verlauf gemäß Figur 3.

Gemäß einer Weiterbildung der Erfindung weist die Ausnehmung beliebig viele Bereiche auf. Die Bereiche unterscheiden sich nur dahingehend, dass zwischen ihnen eine Stufe ausgebildet ist.

Vorzugsweise entspricht der Oberflächenquerschnitt eine Ausnehmung mindestens zweimal dem Querschnitt der Ausnehmung plus der Erstreckung des Ventilsitzes in Umfangsrichtung.

Wenn die Länge eines Bereichs einer Ausnehmung größer als der Außendurchmesser des Ventilsitzes ist, können zwei Stufen im Querschnittsverlauf mit einem Bereich gebildet werden. Dies ergibt sich dadurch, da das Fluid von zwei Seiten den Ventilsitz umströmen kann.

## Patentansprüche

1. Ventil (1), insbesondere Expansionsventil, zum Regeln eines Durchflusses eines Fluids in einem Fluidkreislauf, insbesondere eines Kältemittels in einem Kältemittelkreislauf, aufweisend ein Ventilkörper (5) mit Anschlüssen zum Verbinden mit Fluidleitungen, wobei die Anschlüsse mit einem inneren Volumen (10) des Ventilkörpers (5) mittels Durchgangsausnehmungen (20a, 20b) verbunden sind, sowie ein um eine Drehachse (18) drehbar gelagertes Ventilmittel (15), welches in dem inneren Volumen (10) des Ventilkörpers (5) angeordnet ist, **dadurch gekennzeichnet, dass** das Ventilmittel (15) eine kanalartig ausgebildete Ausnehmung (16, 16a, 16b) in der Oberfläche aufweist, wobei die Ausnehmung (16) einen ersten Bereich (16a) und einen zweiten Bereich (16b) aufweist, wobei in jedem Bereich der Querschnitt (A) gleichbleibend ist und wobei zwischen den Bereichen der Querschnitt (A) sich sprungartig ändert.

2. Ventil (1) nach dem vorhergehenden Anspruch, **dadurch gekennzeichnet, dass** das Ventilmittel (15) als Vollkörper ausgebildet ist.

3. Ventil (1) nach einem der vorhergehenden Ansprüche, **dadurch gekennzeichnet, dass** der erste Bereich (16a) und der zweite Bereich (16b) zusammen mindestens 90 % der Ausnehmung (16) umfassen.

4. Ventil (1) nach einem der vorhergehenden Ansprüche, **dadurch gekennzeichnet, dass** der Übergang zwischen Oberfläche des Ventilmittels (15) und der Ausnehmung (16) sprungartig, insbesondere entsprechend einer Stufe, ausgebildet ist.

5. Ventil (1) nach einem der vorhergehenden Ansprüche, **dadurch gekennzeichnet, dass** sich die Ausnehmung (16) mit einem Winkel zwischen 0 und 90 Grad, insbesondere 0 und 45 Grad, vorzugsweise 0 Grad, gegenüber einer gedachten Ebene deren Normalenvektor parallel zur Drehachse (18) verläuft, erstreckt.

6. Ventil (1) nach einem der vorhergehenden Ansprüche, **dadurch gekennzeichnet, dass** ein Ventilsitz (30b) ausgebildet ist, der an die Durchgangsausnehmung (20b) anschließend und angrenzend an das Ventilmittel (15) angeordnet ist.

7. Ventil (1) nach einem der vorhergehenden Ansprüche, **dadurch gekennzeichnet, dass** der Ventilsitz (30b) ein, insbesondere im Wesentlichen rundes, Dichtelement aufweist, welches eine dichtende Schnittstelle zwischen dem Ventilkörper (5) und dem Ventilmittel (15) bildet.

8. Ventil (1) nach einem der vorhergehenden Ansprüche, **dadurch gekennzeichnet, dass** das Ventilmittel (15) im Wesentlichen kugelförmig ausgebildet ist.

9. Ventil (1) nach einem der vorhergehenden Ansprüche, **dadurch gekennzeichnet, dass** die Durchgangsausnehmungen (20a, 20b) zylinderförmig ausgebildet sind und dass der Ventilsitz (30b) eine zylinderförmige Innenfläche aufweist, die sich an die zylinderförmige Durchgangsausnehmung (20b) anschließt.

10. Ventil (1) nach einem der vorhergehenden Ansprüche, **dadurch gekennzeichnet, dass** zwischen den Durchgangsausnehmungen (20a, 20b) ein Winkel zwischen 45 und 180 Grad, insbesondere ein rechter Winkel, ausgebildet ist.

11. Kraftfahrzeug mit einem Ventil (1) gemäß einem der vorhergehenden Ansprüche.
